# EUROPÄISCHE PATENTANMELDUNG

(11) **EP 2 322 335 A1**
(43) Veröffentlichungstag der Anmeldung: **18.05.2011**
(21) Anmeldenummer: 09014182.1
(22) Anmeldetag: 12.11.2009
(51) Int. Cl.: B29C 43/22, B29C 47/88, B29D 11/00

(54) **Bandkalander**

(71) Anmelder: Kark AG, 21149 Hamburg (DE)
(72) Erfinder: Matthies, Heiko, 21255 Kakenstorf (DE)
(74) Vertreter: Glawe, Delfs, Moll

(57) **Zusammenfassung**

Die Erfindung betrifft eine Vorrichtung (1) und ein Verfahren zur kontinuierlichen Herstellung optisch abbildungsfähiger Folien, Bahnen und Platten. Die Vorrichtung (1), welche zur Ausführung des erfindungsgemäßen Verfahrens ausgebildet ist, umfasst eine Zylinderwalze (10), eine Kalanderwalze (20), eine Auslaufwalze (30) und einen Extruder (40), wobei durch den Extruder (40) Schmelze in einen Walzenspalt (21) zwischen Kalanderwalze (20) und Zylinderwalze (10) eingebracht und aufgrund einer Gravur der Zylinderwalze (10) profiliert wird. Die Schmelze wird anschließend abgekühlt, bis sie als Folie oder Bahn im Bereich der Auslaufwalze (40) von der Zylinderwalze (10) abgelöst werden kann. Zwischen Kalanderwalze (20) und Auslaufwalze (30) wird die Schmelze bzw. die Folie oder Bahn mit wenigstens einer Glättwalze (50) an die Zylinderwalze (10) angedrückt.

## Beschreibung

Die Erfindung betrifft eine Vorrichtung und ein Verfahren zur kontinuierlichen Herstellung optisch abbildungsfähiger Folien, Bahnen und Platten.

Aus der EP 1 210 223 B1 ist ein Verfahren zur kontinuierlichen Herstellung optisch abbildungsfähiger Folien, Bahnen und Platten aus Kunststoffen bekannt, bei der eine flächig vorgeformte Kunststoffschmelze zwischen einer gravurtragende Zylinderwalze und ein, die Zylinderwalze teilweise umspannendes Glättband eingeführt und in dem so gebildeten Formungsraum durch Wärmeentzug erkaltend profiliert wird. Das Glättband, welches die Zylinderwalze über wenigstens die Hälfte ihres Umfangs umspannt, dient dabei dem Eindrücken der Kunststoffschmelze in die Gravuroberfläche der Zylinderwalze während des Erkaltens. Durch den so gebildeten Kalander kann beispielsweise eine lineare Prismenplatte oder eine lineare Fresnellinse aus Kunststoff gefertigt werden.

Nachteilig an diesem Stand der Technik ist, dass die Größe des Spalts zwischen Glättband und Zylinderwalze, die sich in der Dicke der zu fertigenden Folie, Bahn oder Platte widerspiegelt, schlecht einstellbar ist. Außerdem erfordert die Vorrichtung bzw. das Verfahren aus der EP 1 210 223 B1 eine lange Anlaufzeit bevor die gefertigte Folie die gewünschten Eigenschaften aufweist. Das hängt u.a. damit zusammen, dass sich die Spaltdicke zwischen Glättband und Zylinderwalze erst nach einiger Zeit über den umspannten Umfang vergleichmäßigt. Außerdem ist ein häufiger Austausch des Glättbandes notwendig, da es sich bereits nach kurzer Betriebsdauer plastisch verformt und/oder die erforderliche polierte Oberfläche des Glättbandes stumpf wird.

Soll die Kühlung der zu formenden Kunststoffschmelze von außerhalb der Zylinderwalze erfolgen, so ist dies im Stand der Technik nur möglich, wenn das Kühlmittel - z.B. Wasser - direkt mit der Kunststoffschmelze in Kontakt kommt. Dabei kann es jedoch zu unerwünschten Einschlüssen des Kühlmittels im Kunststoff kommen.

Aufgabe der vorliegenden Erfindung ist es, eine Vorrichtung und ein Verfahren zur kontinuierlichen Herstellung optisch abbildungsfähiger Folien, Bahnen und Platten zu schaffen, die die Nachteile im Stand der Technik nicht oder nur noch im verringerten Maße aufweisen.

Ausgehend von dem eingangsgenannten Stand der Technik wird diese Aufgabe durch eine Vorrichtung gemäß dem Hauptanspruch, sowie ein Verfahren gemäß dem unabhängigen Anspruch gelöst. Vorteilhafte Ausführungsformen ergeben sich aus den abhängigen Ansprüchen.

Demnach betrifft die Erfindung eine Vorrichtung zur kontinuierlichen Herstellung optisch abbildungsfähiger Folien, Bahnen und Platten aus einer Schmelze umfassend eine Zylinderwalze mit außen liegender Gravur und einer Hauptdrehrichtung, einer Kalanderwalze, einer Auslaufwalze und einem Extruder, wobei zwischen Zylinderwalze und Kalanderwalze, sowie zwischen Zylinderwalze und Auslaufwalze jeweils ein Walzenspalt gebildet ist, der Extruder zum Einbringen der Schmelze in den Walzenspalt zwischen Zylinderwalze und Kalanderwalze ausgebildet ist und die Auslaufwalze ausgehend von Extruder in Hauptdrehrichtung hinter der Kalanderwalze angeordnet ist, wobei in Hauptdrehrichtung zwischen Kalanderwalze und Auslaufwalze wenigstens eine Glättwalze vorgesehen und zwischen Zylinderwalze und Glättwalze ein Walzenspalt gebildet ist.

Die Erfindung betrifft weiterhin ein Verfahren zur kontinuierlichen Herstellung optisch abbildungsfähiger Folien, Bahnen und Platten aus einer Schmelze, wobei die Schmelze in einen von einer Zylinderwalze mit außen liegender Gravur und einer Kalanderwalze gebildeten Walzenspalt gebracht und in den so gebildeten Formungsraum profiliert wird, wobei die Schmelze nach der Profilierung im Formungsraum abgekühlt wird und während des Abkühlens mit wenigstens einer Glättwalze an die Zylinderwalze angedrückt wird.

Die Erfindung hat erkannt, dass ein kontinuierliches Andrücken der abkühlenden Schmelze an die Gravurseite der Zylinderwalze nicht erforderlich ist. Ein Glättband, wie es noch im Stand der Technik zur Erfüllung dieser Funktion unerlässlich schien, ist überraschenderweise nicht erforderlich. Vielmehr ist es ausreichend, wenn der abkühlende Kunststoff durch wenigstens eine Glättwalze, d.h. lediglich an wenigstens einem diskreten Punkt, gegen die Zylinderwalze angedrückt wird. Das Andrücken an wenigstens einem diskret Punkt durch wenigstens eine Glättwalze ist ausreichend, um zum einen die abkühlende Schmelze soweit in die Gravur der Zylinderwalze einzudrücken, dass sie auf ihrer einen Seite die Gravur exakt eingeprägt bekommt und dass die der Zylinderwalze abgewandte Seite der abkühlenden Schmelze glatt und eben bleibt. Das Glättband aus dem Stand der Technik mit seiner aufwändigen Fertigung kann somit vollständig entfallen, womit sich auch die vielen Probleme hinsichtlich des Handlings, der Montage, der Reinigung und mit der sehr empfindlichen Oberfläche - wie sie noch im Stand der Technik Gang und Gäbe sind - erledigen. Auch fallen aufwändige Einrichtungen zur Temperierung des Glättbandes weg.

Bei der erfindungsgemäßen Vorrichtung wird die Schmelze durch den Extruder in den Walzenspalt zwischen Zylinderwalze und Kalanderwalze eingebracht, wobei dieser Walzenspalt einen Formungsraum bildet, in dem die Schmelze aufgrund der Gravur der Zylinderwalze profiliert wird. Die profilierte Schmelze wird mit der Zylinderwalze in Hauptdrehrichtung mitgeführt und kühlt dabei ab. Während des Abkühlens wird die zu einer Folie oder Bahn erstarrende Schmelze mittels wenigstens einer Glättwalze an die Zylinderwalze angedrückt. Dies dient dazu, den Verlust der Profilierung durch Fließprozesse zu verhindern und die glatte und ebene Oberfläche auf der von der Zylinderwalze abgewandten Seite der abkühlenden Schmelze sicherzustellen. Im Bereich des Walzenspaltes zwischen Zylinderwalze und Auslaufwalze ist die Folie oder Bahn soweit abgekühlt, dass sie sich ausschließlich elastisch verformen lässt. Sie kann dann über die Auslaufwalze von der Zylinderwalze abgelöst werden und als Ergebnis liegt eine kontinuierliche profilierte Folie oder Bahn (die anschließend ggf. in Platten aufgeteilt werden kann) vor, die je nach gewählter Gravur der Zylinderwalze optisch abbildungsfähig sind.

Es ist bevorzugt, wenn die wenigstens eine Glättwalze, die Kalanderwalze und/oder die Auslaufwalze in radialer Richtung der Zylinderwalze verschiebbar sind. Es ist so möglich, den jeweiligen Walzenspalt zwischen den genannten Walzen und der Zylinderwalze einzustellen, womit die Dicke der zu produzierenden Folien, Bahnen oder Platten eingestellt werden kann. Im Gegensatz zu dem Stand der Technik mit Glättband ist es möglich, die für die Veränderung der Dicke der zu produzierenden Folien, Bahnen und Platten notwendigen Einstellungen bei Stillstand der Vorrichtung und ohne Verwendung von Schmelze vorzunehmen. Außerdem entfällt die im Stand der Technik benötigte lange Anlaufzeit, bis sich der Abstand zwischen Glättband und Zylinderwalze über den Umfang der Zylinderwalze vergleichmäßigt hat. Versuche haben ergeben, dass es auch möglich ist, die Dicke der zu produzierenden Folien, Bahnen und Platten während des Betriebes zu verändern. Es sind Dicken von bis zu 2 mm oder bis zu 3 mm erreichbar.

Es ist bevorzugt, wenn die wenigstens eine Glättwalze federnd gelagert ist. Aufgrund einer federnden Lagerung ist es möglich, die Einstellung der Glättwalzen nicht anhand des Walzenspaltes sondern über den Anpressdruck festzulegen. Außerdem kann die Glättwalze dann über Unebenheiten im Kunststoff hinwegrollen, ohne dass es zu einem Reißen der Folie oder der Bahn käme, der einen Stopp der Produktion zur Folge haben könnte. Insbesondere wenn mehr als eine Glättwalze eingesetzt wird, ist dies von Vorteil, da Unebenheiten durch das Anpressen jeder federnd gelagerten Glättwalze abgemildert werden können, so dass an der Auslaufwalze eine glatte und ebene Oberfläche der Folie oder Bahn auf der von der Zylinderwalze abgewandten Seite vorliegt.

Vorzugsweise ist die wenigstens eine Glättwalze temperiert. Indem die Glättwalze temperiert ist, d.h. die Temperatur der Oberfläche der Glättwalze durch ein Heiz- und/oder Kühlelement auf einem einstellbaren Wert konstant gehalten wird, ist es möglich, den Temperaturverlauf des Abkühlens der Schmelze zu beeinflussen. Es können so für das verwendete Material vorteilhafte Temperaturverläufe für das Abkühlen realisiert werden.

Die wenigstens eine Glättwalze kann antriebslos sein und lediglich aufgrund von Reibkontakt mit der abkühlenden Schmelze bzw. der Folie oder Bahn in Rotation versetzt werden. Bevorzugt ist es aber, wenn die Glättwalze eine Antriebseinheit aufweist, die einen Gleichlauf mit der Zylinderwalze gewährleistet. Dadurch wird sichergestellt, dass von der Glättwalze ausschließlich Kräfte in Radialrichtung der Zylinderwalze auf die abkühlende Schmelze bzw. die Folie oder Bahn übertragen werden und keine Kräfte in Umfangsrichtung, die ein ungewolltes Ablösen der Folie oder Bahn von der Zylinderwalze zur Folge haben könnte. Auch wird so ein ungewolltes Induzieren von Spannungen in die Oberfläche der abkühlenden Schmelze bzw. Folie oder Bahn vermieden.

Es ist bevorzugt, wenn wenigstens zwei Glättwalzen vorgesehen sind. Die Produktqualität kann dadurch weiter erhöht werden. Bevorzugt ist es, wenn die wenigstens zwei Glättwalzen mechanisch so miteinander gekoppelt sind, dass sie die gleiche Rotationsgeschwindigkeit aufweisen. Die mechanische Kopplung zwischen zwei benachbarten Glättwalzen kann dabei durch ein Zwischenrad erfolgen. Aufgrund der mechanischen Kopplung ist es beispielsweise möglich, dass nur eine Antriebseinheit für alle Glättwalzen einer erfindungsgemäßen Vorrichtung vorgesehen sein muss.

Es ist bevorzugt, wenn ein Heizsegment zum Heizen der Zylinderwalze in Hauptdrehrichtung zwischen Auslaufwalze und Kalanderwalze und ein Kühlsegment zum Kühlen der Zylinderwalze in Hauptdrehrichtung zwischen Kalanderwalze und Auslaufwalze vorgesehen sind. Dies bietet den Vorteil, dass aus dem Extruder austretende Schmelze zunächst auf eine Zylinderwalze trifft, deren Temperatur in diesem Bereich so gewählt sein kann, dass sie oberhalb der Schmelztemperatur des verwendeten Materials liegt. Dadurch wird verhindert, dass es zu einem Schockerstarren der Schmelze kommt, womit eine qualitativ hochwertige Profilierung nicht möglich wäre. Durch das Kühlsegment kann die Schmelze im Bereich bis zur Auslaufwalze dann soweit abgekühlt werden, dass er ausschließlich elastisch verformbar ist.

Es ist bevorzugt, wenn das Heizsegment und das Kühlsegment innerhalb des Umfangs der Zylinderwalze angeordnet sind. Dadurch kann sichergestellt werden, dass eventuell verwendete Heiz- und/oder Kühlmittel nicht mit der Schmelze selbst in Berührung kommen können. Die Zylinderwalze kann bevorzugt eine Hülse umfassen, die drehbar auf einem nicht rotierbaren Grundkörper gelagert ist. Dadurch muss zum einen lediglich die Hülse aufgewärmt und abgekühlt werden, was einen geringeren Energieaufwand als bei einer Vollwalze bedeutet; zum anderen ist es möglich, Heizsegment und Kühlsegment für die Zylinderwalze in fester Position innerhalb der Hülse anzuordnen.

Es ist bevorzugt, wenn die Zylinderwalze, Kalanderwalze und Auslaufwalze jeweils eine eigene Antriebseinheit aufweisen. Auch wenn die Umfangsgeschwindigkeit der Zylinderwalze unabhängig von der zu produzierenden Folie oder Bahn konstant bleiben kann, so muss die Umfangsgeschwindigkeit der Kalanderwalze und der Auslaufwalze abhängig von der Dicke der zu produzierenden Folie oder Bahn verändert werden. Indem jeweils eine eigene Antriebseinheit für die genannten Walzen vorgesehen ist, lässt sich die Geschwindigkeitseinstellung der einzelnen Walzen ohne großen mechanischen Aufwand realisieren, sondern bspw. über ein Regelungseinrichtung.

Es ist bevorzugt, wenn die Oberfläche der Kalanderwalze und/oder der wenigstens einen Glättwalze hochglanzpoliert ist. Dies erhöht die Oberflächengüte der zu produzierenden Folien und Bahnen.

Weiter bevorzugt ist es, wenn die Schmelze eine Kunststoffschmelze, vorzugsweise eine PMMA-Schmelze ist.

Zur Erläuterung des erfindungsgemäßen Verfahrens wird auf die vorstehenden Ausführungen verwiesen.

Die Erfindung wird nun anhand vorteilhafter Ausführungsformen unter Bezugnahme auf die beigefügte Zeichnung beispielhaft beschrieben. Es zeigt:

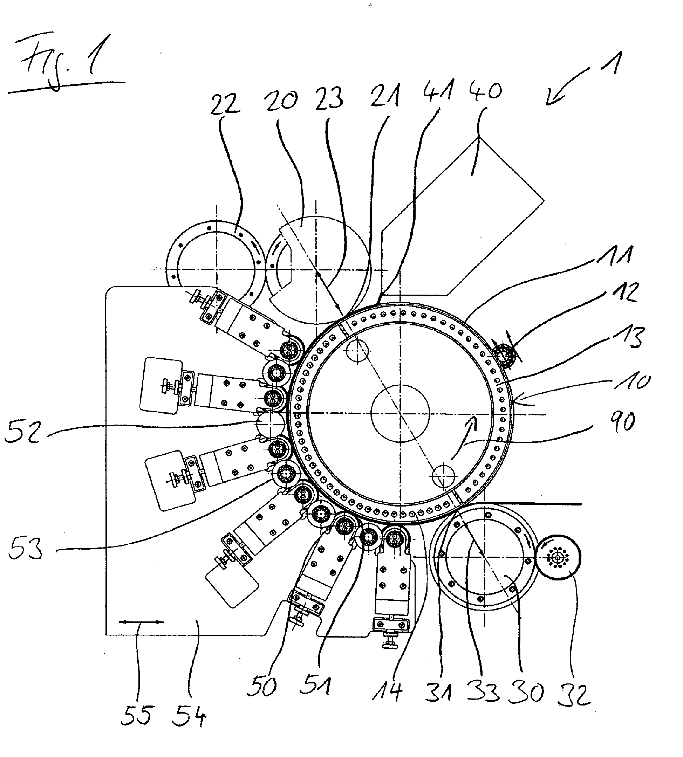

- Figur 1:: ein erstes Ausführungsbeispiel einer erfindungs- gemäßen Vorrichtung zur kontinuierlichen Herstel- lung optisch abbildungsfähiger Folien, Bahnen und Platten.

Die Vorrichtung 1 zur kontinuierlichen Herstellung optisch abbildungsfähiger Folien, Bahnen und Platten in Figur 1 umfasst eine Zylinderwalze 10, eine Kalanderwalze 20, eine Auslaufwalze 30 und einen Extruder 40.

Die Zylinderwalze 10 umfasst eine Hülse 11, die drehbar auf einem nicht rotierbaren Grundkörper gelagert ist. Die Hülse 11 weist auf ihrer Außenseite eine Gravur auf und wird durch eine Antriebseinheit 12 in einer Hauptdrehrichtung, die durch Pfeil 90 angedeutet ist, angetrieben.

Die Kalanderwalze 20 so angeordnet, dass zwischen ihr und der Zylinderwalze 10 ein Walzenspalt 21 gebildet ist. Die Kalanderwalze 20 weist eine hochglanzpolierte Oberfläche auf und wird durch eine Antriebseinheit 22 in Rotation versetzt. Die Kalanderwalze 20 kann in radialer Richtung der Zylinderwalze 10 verschoben werden, was durch den Doppelpfeil 23 angedeutet ist. Dadurch lässt sich der Walzenspalt 21 einstellen. Die Größe des Walzenspalt 21 spiegelt sich direkt in der Dicke der zu produzierenden Folie, Bahn oder Platte wieder.

Zwischen Auslaufwalze 30 und Zylinderwalze 10 ist ebenfalls ein Walzenspalt 31 gebildet. Die Auslaufwalze 30 wird durch die Antriebseinheit 32 in Rotation versetzt. Der Walzenspalt 31 lässt sich aufgrund einer Verschiebbarkeit der Auslaufwalze 30 in radialer Richtung der Zylinderwalze 10 einstellen. Die Verschiebbarkeit der Auslaufwalze 30 ist durch den Doppelpfeil 33 angedeutet.

Der Extruder 40 weist eine Breitschlitzdüse 41 auf, mit der eine Kunststoffschmelze in den Walzenspalt 21 zwischen Kalanderwalze 20 und Zylinderwalze 10 eingebracht werden kann. Der Walzenspalt 21 bildet einen Formungsraum, in dem der Schmelze die Gravur der Zylinderwalze 10 eingeprägt wird, wobei die Gravur so gewählt ist, dass optisch abbildungsfähige Folien, Bahnen und Platten hergestellt werden. Die profilierte Schmelze wird mit der Zylinderwalze 10 in Hauptdrehrichtung 90 mitgeführt und kühlt soweit ab, dass sie an der Auslaufwalze 30 lediglich elastisch verformbar ist und sich die so hergestellte Folie oder Bahn von der Zylinderwalze 10 lösen lässt, ohne dass die durch die Gravur der Zylinderwalze 10 eingebrachte Profilierung der Oberfläche der Folie oder Bahn verloren geht. Die Auslaufwalze 30 ist ausgehend vom Extruder 40 in Hauptdrehrichtung 90 hinter der Kalanderwalze 20 angeordnet.

Innerhalb des Umfangs der Zylinderwalze 10 sind ein Heizsegment 13 und ein Kühlsegment 14 angeordnet. Das Heizsegment 13 ist dabei so ausgebildet und angeordnet, dass die Hülse 11 in Hauptdrehrichtung 90 zwischen Auslaufwalze 30 und Kalanderwalze 20 erwärmt wird. Dadurch kann sichergestellt werden, dass die Hülse 10 in dem Bereich, in dem die Schmelze durch den Extruder 40 auf die Zylinderwalze 10 aufgebracht wird, eine Temperatur oberhalb der Schmelztemperatur der Schmelze aufweist. Ein Schockerstarren der Schmelze, das eine qualitativ hochwertige Profilierung unmöglich machen würde, wird so verhindert. Durch das Kühlsegment 14, welches in Hauptdrehrichtung 90 zwischen Kalanderwalze 20 und Auslaufwalze 30 angeordnet ist, kann die Schmelze nach der Profilierung im Walzenspalt 21 soweit abgekühlt werden, dass die Folie oder Bahn im Bereich der Auslaufwalze 30 ausschließlich elastisch verformt. Sie kann dann an der Auslaufwalze 30 von der Zylinderwalze 10 gelöst werden, ohne dass die Profilierung verloren geht. Die für das Heiz- und Kühlsegment 13, 14 ggf. verwendeten Heiz- und Kühlflüssigkeiten kommen mit der Schmelze bzw. der Folie oder Bahn nicht in Kontakt, weshalb ungewollte Einschlüsse o.ä. vermieden werden.

In Hauptdrehrichtung 90 zwischen Kalanderwalze 20 und Auslaufwalze 30 sind Glättwalzen 50 vorgesehen, die mit der Zylinderwalze 10 jeweils einen Walzenspalt 51 bilden. Die Glättwalzen 50 sind in radialer Richtung der Zylinderwalze 10 verschiebbar und federnd gelagert. Durch die Glättwalzen 50 wird die erkaltende und erstarrende Schmelze an diskreten Punkten gegen die Zylinderwalze 10 gedrückt. Dadurch wird sichergestellt, dass die im Walzenspalt 21 erfolgte Profilierung erhalten bleibt und die von der Zylinderwalze 10 abgewandte Seite der Schmelze bzw. Folie oder Bahn eben und glatt ist. Der Anpressdruck kann über die federnde Lagerung der Glättwalzen 50 variiert werden.

Zwischen zwei benachbarten Glättwalzen 50 ist ein Zwischenrad 53 vorgesehen, welches die benachbarten Glättwalzen 50 mechanisch koppelt. Dadurch wird sichergestellt, dass sich die Rotation einer Glättwalzen 50 auf die Benachbarte überträgt und die Glättwalzen 50 die gleiche Rotationsgeschwindigkeit aufweisen. Eines der Zwischenräder 53 ist als Antriebselement 52 ausgebildet. Aufgrund der Zwischenräder 53 ist das eine Antriebselement 52 ausreichend, um alle Glättwalzen 50 anzutreiben.

Die Glättwalzen 50 sind temperiert, d.h. ihre jeweilige Oberflächentemperatur kann durch Heiz- und/oder Kühlelemente (nicht dargestellt) auf einen vorgegeben Wert gehalten werden. Durch unterschiedliche Temperaturen jeder Glättwalze 50 lässt sich ein für das Abkühlen der Schmelze optimaler Temperaturverlauf realisieren.

Die Glättwalzen 50 sind an einem Trägermodul 54 befestigt. Das Trägermodul 54 lässt sich linear in die durch den Doppelpfeil 55 angedeutete Richtung verschieben.

Einer mit der erfindungsgemäßen Vorrichtung produzierte Folie kann anschließend an den Produktionsprozess aufgewickelt werden. Eine produzierte, kontinuierliche Bahn kann anschließend an der Produktionsprozess ggf. in Platten geteilt werden.

Die Antriebseinheiten 12, 22, 32, 52 lassen sich über eine Regelungseinrichtung (nicht dargestellt) stufenlos regeln. Auch die Walzenspalte 21, 31, 51 lassen sich vorzugsweise über die Regelungseinrichtung einstellen, wobei das Einstellen der Walzenspalte 21, 31, 51 auch während des Betriebes erfolgen kann. Gleiches gilt für die Temperaturen der Glättwalzen 50, sowie des Heiz- und Kühlsegmentes 13, 14.

## Patentansprüche

1. Vorrichtung zur kontinuierlichen Herstellung optisch abbildungsfähiger Folien, Bahnen und Platten aus einer Schmelze umfassen eine Zylinderwalze (10) mit außen liegender Gravur und einer Hauptdrehrichtung (90), einer Kalanderwalze (20), einer Auslaufwalze (30) und einem Extruder (40), wobei zwischen Zylinderwalze (10) und Kalanderwalze (20), sowie zwischen Zylinderwalze (10) und Auslaufwalze (30) jeweils ein Walzenspalt (21, 31) gebildet ist, der Extruder (40) zum Einbringen der Schmelze in den Walzenspalt (21) zwischen Zylinderwalze (10) und Kalanderwalze (20) ausgebildet ist und die Auslaufwalze (30) ausgehend vom Extruder (40) in Hauptdrehrichtung (90) hinter der Kalanderwalze (20) angeordnet ist,
**dadurch gekennzeichnet, dass**
in Hauptdrehrichtung (90) zwischen Kalanderwalze (20) und Auslaufwalze (30) wenigstens eine Glättwalze (50) vorgesehen ist, wobei zwischen Zylinderwalze (10) und Glättwalze (50) ein Walzenspalt (51) gebildet ist.

2. Vorrichtung nach Anspruch 1, **dadurch gekennzeichnet, dass**
die wenigstens eine Glättwalze (50), die Kalanderwalze (20) und/oder die Auslaufwalze (30) in radialer Richtung (23, 33) der Zylinderwalze (10) verschiebbar sind.

3. Vorrichtung nach einem der vorhergehenden Ansprüche, **dadurch gekennzeichnet, dass**
die wenigstens eine Glättwalze (50) federnd gelagert

4. Vorrichtung nach einem der vorhergehenden Ansprüche, **dadurch gekennzeichnet, dass**
die wenigstens eine Glättwalze (50) temperiert ist.

5. Vorrichtung nach einem der vorhergehenden Ansprüche, **dadurch gekennzeichnet, dass**
die wenigstens eine Glättwalze (50) eine Antriebseinheit (52) aufweist.

6. Vorrichtung nach einem der vorhergehenden Ansprüche, **dadurch gekennzeichnet, dass**
wenigstens zwei Glättwalzen (50) vorgesehen sind, wobei die Glättwalzen (50) vorzugsweise mechanisch miteinander gekoppelt sind.

7. Vorrichtung nach dem vorhergehenden Anspruch, **dadurch gekennzeichnet, dass**
zwischen zwei benachbarten Glättwalzen (50) ein Zwischenrad (53) zur mechanischen Kopplung vorgesehen ist.

8. Vorrichtung nach einem der vorhergehenden Ansprüche, **dadurch gekennzeichnet, dass**
ein Heizsegment (13) zum Heizen der Zylinderwalze (10) in Hauptdrehrichtung (90) zwischen Auslaufwalze (30) und Kalanderwalze (20) und ein Kühlsegment (14) zum Kühlen der Zylinderwalze (10) in Hauptdrehrichtung (90) zwischen Kalanderwalze (20) und Auslaufwalze (30) vorgesehen sind.

9. Vorrichtung nach dem vorhergehenden Anspruch, **dadurch gekennzeichnet, dass**
das Heizsegment (13) und das Kühlsegment (14) innerhalb des Umfangs der Zylinderwalze (10) angeordnet sind.

10. Vorrichtung nach einem der vorhergehenden Ansprüche,
**dadurch gekennzeichnet, dass**
für die Zylinderwalze (10), Kalanderwalze (20) und Auslaufwalze (30) jeweils eine Antriebseinheit (11, 21, 31) vorgesehen ist.

11. Vorrichtung nach einem der vorhergehenden Ansprüche,
**dadurch gekennzeichnet, dass**
die Oberfläche der Kalanderwalze (20) hochglanzpoliert ist.

12. Vorrichtung nach einem der vorhergehenden Ansprüche,
**dadurch gekennzeichnet, dass**
die Schmelze eine Kunststoffschmelze, vorzugsweise eine PMMA-Schmelze ist.

13. Verfahren zur kontinuierlichen Herstellung optisch abbildungsfähiger Folien, Bahnen und Platten aus eine Schmelze, wobei die Schmelze in einen von einer Zylinderwalze (10) mit außen liegender Gravur und einer Kalanderwalze (20) gebildeten Walzenspalt (21) gebracht und in dem so gebildeten Formungsraum profiliert wird, wobei die Schmelze nach der Profilierung im Formungsraum abgekühlt wird und während des Abkühlens mit wenigstens einer Glättwalze (50) an die Zylinderwalze (10) angedrückt wird.

14. Verfahren nach dem vorhergehenden Anspruch, **dadurch gekennzeichnet, dass**
der Walzenspalt (21) zwischen Zylinderwalze (10) und Kalanderwalze (20) während des Betriebes verändert wird.
